# EUROPEAN PATENT SPECIFICATION

(11) **EP 2 889 685 B1**
(45) Date of publication and mention of the grant of the patent: **04.04.2018**
(21) Application number: 14192493.6
(22) Date of filing: 10.11.2014
(51) Int. Cl.: G02F 2/02, G03B 21/20

(54) **Wavelength converter, optical system and light source unit incorporating wavelength converter, and projection device incorporating light source unit**
Wellenlängenwandler, optisches System und Lichtquelleneinheit mit Wellenlängenwandler und Projektionsvorrichtung mit Lichtquelleneinheit
Convertisseur de longueur d'onde, système optique et unité de source de lumière incorporant un convertisseur de longueur d'onde et dispositif de projection incorporant ladite unité

(30) Priority: 23.12.2013 JP 2013264754
(43) Date of publication of application: 01.07.2015
(73) Proprietor: Ricoh Company, Ltd., Tokyo 143-8555 (JP)
(72) Inventor: Fujita, Kazuhiro, Ohta-ku, Tokyo 143-8555 (JP)
(74) Representative: J A Kemp

(56) References cited:
- EP-A1- 2 602 537
- WO-A1-2009/017992
- WO-A1-2012/138020
- JP-A- 2012 068 464
- US-A1- 2012 050 691
- US-A1- 2012 188 516

## Description

The present invention relates to a wavelength converter, an optical system and a light source unit incorporating the wavelength converter, and a projection device incorporating the light source unit.

In recent years a large-screen display device has been rapidly widespread and generally used in a variety of occasions such as in meetings or for presentation or job-training. Various kinds of display device such as LCD TV, plasma TV are available.

Users select a desired display device from various types of devices depending on a size of a site or a place, the number of participants, and else. Particularly, a projector which can project an enlarged image on a plane as a screen is a relatively inexpensive and excels in portability. This type of large-screen display has been popular owing to its reasonable price, small size, light weight and portability.

Situations and scenes in which communications are necessary are increasing. For example, a large number of small conference rooms and partitioned meeting spaces are provided in work places and meetings and discussions using a projector are common.

Further, in an urgent situation a meeting may be held on a space on the street, projecting information on a nearby wall, for example.

In related art this type of projector mainly uses a high-brightness discharge lamp such as ultrahigh-pressure mercury lamp for a light source. A large number of projectors using a light-emitting diode (LED) to emit red, green, and blue light or a solid light emitting element as organic EL as a light source have been developed or proposed.

Further, a projector incorporating a light source unit to generate three primary color lights is under development. This light source unit uses a laser beam from a blue laser diode (LD) as excitation light and color light to irradiate a phosphor as a wavelength converting material with the excitation light to generate green and red fluorescent lights and generate three primary color lights.

For example, Japanese Laid-open Patent Application Publication No. 2009-277516 (Reference 1) discloses a projector with such a light source unit which comprises a wavelength converter including a transparent base with segmented regions on which phosphors are provided to generate different color fluorescent lights when irradiated with excitation light. This reference also describes a cooling structure for an illumination unit.

Further, Japanese Laid-open Patent Application Publication No. 2012-159685 (Reference 2) discloses a projector which comprises a light source to emit excitation light and a transmission type rotational element as a wavelength converter including a fluorescent element to emit fluorescence in accordance with the excitation light, a first reflector to transmit the excitation light and reflect the fluorescence, and a second reflector to reflect at least the excitation light.

This fluorescent element is provided further from the first reflector and closer to the second reflector, as seen from the light source. The excitation light having transmitted through the first reflector and that reflected by the second reflector are guided to the fluorescent element, thereby improving use efficiency of the excitation light.

Reference 2 also describes another exemplary configuration that the second reflector has the optical property to reflect both the excitation light and the fluorescence and the first reflector has the optical property to transmit both of them.

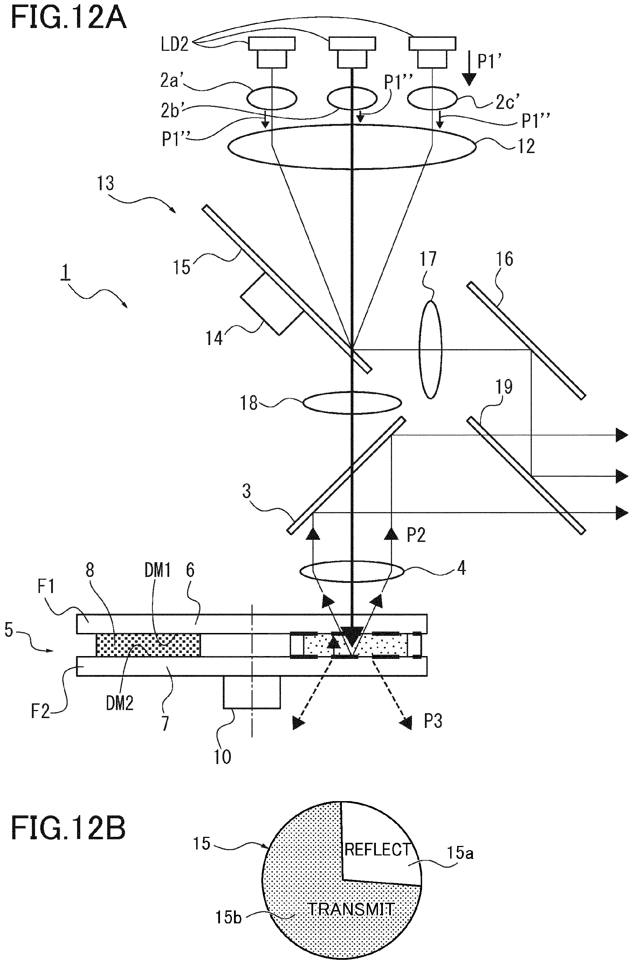

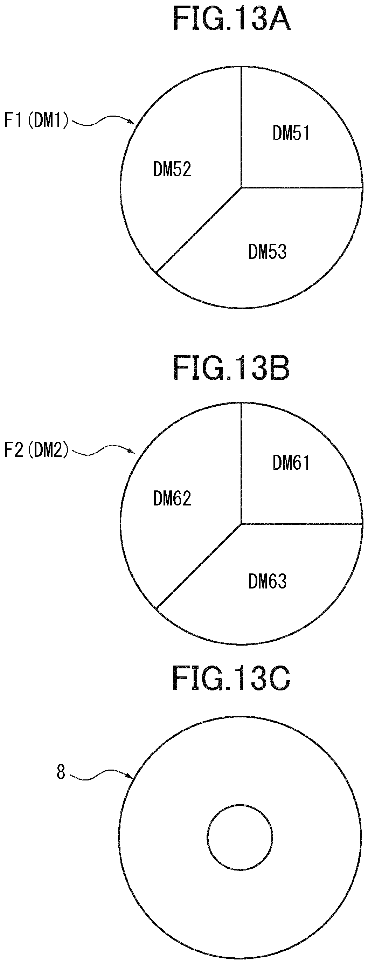

According to an example of the projector in Reference 2 (FIGs. 12 and 13), fluorescence is extracted from the same side as an incidence side of the excitation light. Therefore, optical elements are commonly used, making it possible to downsize the light source unit and the projector.

EP-2,602,537 discloses a light source device for converting excited light into long-wavelength light having a longer wavelength than the excited light to more efficiently emit the light having a desired wavelength. The light source includes: an excited light source emitting excited light; a wavelength conversion member including a light transmission plate and a wavelength conversion layer formed on the light transmission plate and receiving the excited light from the excited light source and emitting long-wavelength light having a longer wavelength than the excited light, the excited light emitted from the excited light source being incident upon one side of the wavelength conversion layer; a light reflection member provided at one side of the wavelength conversion member and including an excited light transmission window transmitting the excited light;; and a filter member provided at the other side of the wavelength conversion member and reflecting the excited light and transmitting the long-wavelength light.

WO-2009/017992 discloses a multicolor illumination device using an excitation light source and a multi-segmented moving plate with wavelength conversion materials (e.g. phosphors). The exciting light source is a light emitting diode or a laser diode emitting in the UV and/or blue region. The wavelength conversion materials absorb the excitation light and emit longer wavelength light. Each segment of the moving plate contains a different wavelength conversion material or no wavelength conversion material. The plate is supported to move so that different segments are exposed to the excitation light at different times. The plate may be a wheel or rectangular in shape and rotates or oscillates linearly. When the plate moves, light of different colors is generated sequentially in time by the different wavelength conversion materials in different segments of the plate. The multicolor illumination device may be used in a projector system having a microdisplay imager for image display.

WO-2012/138020 discloses a light source apparatus and a method for manufacturing the same. The light source apparatus is capable of enhancing color reproducibility by a wavelength conversion material configured to convert a wavelength of excitement light, and including an inorganic or organic pigment for absorbing or reflecting/transmitting a specific wavelength band of the wavelength-converted light. The light source apparatus comprises a light source configured to generate excitation light, an optical system configured to focus the excitation light, and a color wheel configured to generate a plurality of color lights based on the focused excitation light, wherein the color wheel comprises a fluorescent layer configured to convert a wavelength of the excitement light, containing an inorganic or organic pigment for absorbing or transmitting (reflecting) a specific wavelength band of the wavelength-converted light.

However, there is a problem in generating projection light by emitting the excitation light to the wavelength converter with an improved use efficiency of the excitation light, that heat is likely to be accumulated in the wavelength converter due to energy loss and energy absorption caused by the wavelength conversion. As a result, the wavelength conversion efficiency from the excitation light to the fluorescence is deteriorated.

The present invention aims to provide a wavelength converter with a structure that projection light is extracted from a same side as an incidence side of excitation light, which can reduce heat accumulation due to energy loss and energy absorption by wavelength conversion to a minimum.

According to one embodiment, a wavelength converter comprises a wavelength converting material irradiated with excitation light to generate light with a different wavelength from a wavelength of the excitation light, a first filter provided at an incidence side of the excitation light, including a transmission region for transmitting the excitation light and light with a certain wavelength among the light with the different wavelength as selected light from the incidence side of the excitation light and for reflecting light other than the selected light as non-selected light, and a second filter provided opposite to the first filter, placing the wavelength converting material in-between and including a reflection region for reflecting at least the selected light and transmit the non-selected light.

Features, embodiments, and advantages of the present invention will become apparent from the following detailed description with reference to the accompanying drawings:
FIG. 1 schematically shows an optical system of a light source unit according to a first embodiment;
FIG. 2A schematically shows an optical system of a light source unit according to a second embodiment, FIG. 2B shows segmented regions of a dichroic mirror film of a first filter in FIG. 2A, FIG. 2C shows segmented regions of a dichroic mirror film of a second filter in FIG. 2A, and FIG. 2D shows a wavelength converting material in FIG. 2A;
FIGs. 3A to 3D show the light source unit according to the second embodiment in which green light is extracted as selected light;
FIGs. 4A to 4D show the light source unit according to the second embodiment in which blue light is extracted as selected light;
FIG. 5A schematically shows an optical system of a light source unit according to a third embodiment, FIG. 5B shows segmented regions of a dichroic mirror film of a first filter in FIG. 5A, FIG. 5C shows segmented regions of a dichroic mirror film of a second filter in FIG. 5A, and FIG. 5D shows a wavelength converting material in FIG. 5A;
FIGs. 6A to 6D show the light source unit according to the third embodiment in which green light is extracted as selected light;
FIGs. 7A to 7D show the light source unit according to the third embodiment in which blue light is extracted as selected light;
FIG. 8 is a graph showing the reflectivity of P polarization of an optical path separator shown in FIGs. 5A, 6A and 7A;
FIG. 9 is a graph showing the reflectivity of S polarization of the optical path separator shown in FIGs. 5A, 6A and 7A;
FIG. 10 schematically shows an optical system of a light source unit according to a fourth embodiment;
FIGs. 11A to 11C show a wavelength converter according to the fourth embodiment, FIG. 11A shows segmented regions of a dichroic mirror film of a first filter in FIG. 10, FIG. 11B shows segmented regions of a dichroic mirror film of a second filter in FIG. 10 and FIG. 11C shows a wavelength converting material in FIG. 10;
FIG. 12A shows an optical system of a light source unit according to a fifth embodiment and FIG. 12B is a plan view of one example of an optical splitting plate in FIG. 12A;
FIGs. 13A to 13C show a wavelength converter according to the fifth embodiment, FIG. 13A shows segmented regions of a dichroic mirror film of a first filter in FIG. 12A, FIG. 13B shows segmented regions of a dichroic mirror film of a second filter in FIG. 12A and FIG. 13C shows a wavelength converting material in FIG. 12A;
FIG. 14 shows a projection device including the light source unit according to the

### fifth embodiment; and

FIG. 15 shows a projection device including the light source unit according to the second embodiment.

Hereinafter, embodiments of the present invention will be described in detail with reference to the accompanying drawings. Wherever possible, the same reference numbers will be used throughout the drawings to refer to the same or like parts.

### First Embodiment

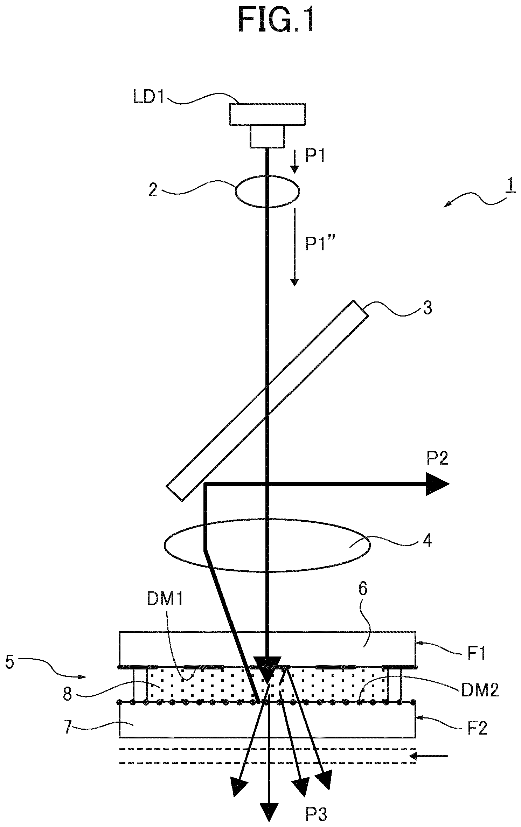

FIG. 1 schematically shows a light source unit 1 according to a first embodiment. In FIG. 1 the light source unit 1 comprises a laser diode LD1 as an excitation light source, a coupling lens 2, an optical path separator 3, a condenser lens 4, and a wavelength converter 5.

The laser diode LD1 emits a laser beam P1 with a wavelength λ1 as excitation light. The coupling lens 2 collects the laser beam P1 and converts it to a parallel beam P1". The optical path separator 3 is provided on an optical path of the laser diode LD1 to transmit the parallel beam P1" and reflect visible light in a certain wavelength range as selected light, as described later.

The condenser lens 4 functions to collect the parallel beam having transmitted through the optical path separator 3 and guide it to the wavelength converter 5 as well as to collect the selected light from the wavelength converter 5 and guide it to the optical path separator 3.

The wavelength converter 5 comprises a pair of a first filter F1 and a second filter F2 opposing each other. The first filter F1 and second filter F2 include transparent plates 6, 7 and dichroic mirror films, respectively.

The transparent plates 6, 7 can be made from a plastic material or a glass material. However, it is preferable to use a heat conductive material for the purpose of preventing degradation of optical property such as a decrease in wavelength conversion efficiency from excitation light to fluorescence due to heat accumulation.

The following table shows heat conductivities of crystal (SiO2), sapphire, diamond (C).

| MATERIAL | HEAT CONDUCTIVITY (UNIT: W·m-1·K-1) |
|---|---|
| GLASS | 1 |
| CRYSTAL(SiO2) | 8 |
| SAPPHIRE | 42 |
| DIAMOND (C) | 1000 - 2000 |

It is preferable to make the transparent plates 6, 7 from crystal or sapphire in view of heat emission since crystal and sapphire are several to several dozen times higher in heat conductivity than general glass. Especially, the use of sapphire which can be artificially manufactured stably and easily available is preferable.

A wavelength converting material 8 is provided between the transparent plates 6, 7. The second filter F2 is placed opposite to the first filter F1, placing the wavelength converting material 8 in-between. The wavelength converting material 8 is a fluorescent material which generates fluorescence (visible light) in a wavelength range different from that of the laser beam P1 when irradiated with the laser beam P1.

The fluorescence material can be, for example, one which can generate fluorescent light in a wavelength range of yellow, green, or red. Herein, fluorescence in a yellow wavelength range is used.

The first filter F1 has optical property to transmit the laser beam P1. A dichroic mirror film DM1 is formed on the side of the transparent plate 6 facing the wavelength converting material 8 or opposite to the incidence side of the laser beam P1. Alternatively, the dichroic mirror film DM1 can be formed on the surface of the transparent plate 6 on which the laser beam P1 is incident.

A dichroic mirror film DM2 is formed on the side of the transparent plate 7 facing the wavelength converting material 8. Alternatively, the dichroic mirror film DM2 can be formed on the opposite side of the transparent plate 4.

The wavelength converting material 8 has a sandwich structure that it is closely adhered onto the transparent plates 6, 7 via the dichroic mirror films DM1, DM2, respectively.

Further, the wavelength converting material 8 can be closely attached onto either of the transparent plates 6, 7 instead of both of the transparent plates 6, 7.

The wavelength converting material 8 attached on either of the transparent plates 6, 7 achieves the following effects. The optical energy of the laser beam P1 not used in the wavelength conversion turns into heat. The wavelength converting material 8 as configured above can efficiently emit the heat via either of the transparent plates 6, 7 and prevent the heat from being accumulated in the wavelength converter 5. This results in avoiding a decrease in the optical property attributed to heat such as the wavelength conversion. Also, it is possible to reduce a damage or degradation of the first and second filters caused by thermal expansion of the wavelength converter 5.

Further, the laser diode LD1 can be one in a ultraviolet wavelength range shorter than a blue wavelength range. Herein, the laser diode LD1 generates the laser beam P1 in a ultraviolet wavelength range.

The dichroic mirror film DM1 has optical property to transmit excitation light (ultraviolet light) P1 and selected light P2 for projection of a later-described projection device and reflect light other than the selected light as non-selected light P3. The dichroic mirror film DM2 has optical property to reflect the excitation light P1 and selected light P2 and transmit the non-selected light P3.

Next, the operation of the wavelength converter 5 is described. The wavelength converting material 8 is excited by the laser beam P1 having transmitted through the dichroic mirror film DM1 and reflected by the dichroic mirror film DM2. Thereby, fluorescence (in green to red wavelength range) of yellow component as visible light is generated.

The wavelength converting material 8 when irradiated with the laser beam P1 emits the fluorescence of yellow component in all directions. A part thereof directly travels to the dichroic mirror film D1, another part thereof travels to the dichroic mirror film DM2 and the rest is absorbed.

The dichroic mirror film DM1 is configured to transmit the laser beam P1 and fluorescence in a green wavelength band as the selected light P2 among the fluorescence in the yellow wavelength band generated by the fluorescent material of the wavelength converting material 8.

Then, the laser beam P1 and selected light P2 travel to the dichroic mirror film DM1 and transmit through the film DM1 and transparent plate 6 to the condenser lens 4 and are converted to a parallel beam by the condenser lens 4.

The converted parallel beam P1 is guided to the optical path separator 3 and radiated therethrough. The parallel selected light P2 is guided to the optical path separator 3 and reflected thereby to a not-shown illumination system.

The laser beam P1 travels to the dichroic mirror film DM2 and is reflected thereby again to the wavelength converting material 8 to excite the wavelength converting material 8. Thus, the wavelength converting material 8 is excited by use of the incidence and reflection of the laser beam P1 to improve the generation efficiency of the fluorescence.

The selected light P2 travels to the dichroic mirror film DM2, is reflected thereby to the dichroic mirror film DM1 and the transparent plate 6, transmits therethrough, and is guided to the condenser lens 4 outside the wavelength converter 5.

Thus, the selected light P2 traveling to the dichroic mirror film DM2 can be also used and the use efficiency of the selected light P2 excited by the laser beam P1 can be enhanced.

The non-selected light P3 travels to the dichroic mirror film DM2 and is radiated to outside through the dichroic mirror film DM2 and the transparent plate 7. Similarly, the non-selected light P3 travels to the dichroic mirror film DM1, is reflected thereby and radiated to outside through the dichroic mirror film DM2 and the transparent plate 7.

Thus, the non-selected light P3 is not enclosed inside the wavelength converter 5 and radiated to the outside of the wavelength converter 5 through the dichroic mirror film DM2 and the transparent plate 7. Accordingly, heat accumulated in the wavelength converter 5 is reduced by the non-selected light P3 so that a decrease in the fluorescence conversion efficiency due to the heat of the wavelength converter 5 can be prevented.

According to the first embodiment it is possible to extract fluorescence with a green wavelength as the selected light P2 by trimming fluorescence in a yellow wavelength range with the dichroic mirror film DM1.

Moreover, fluorescence with a red wavelength can be extracted as the selected light P2 by trimming fluorescence in a yellow wavelength range.

Further, the wavelength converter 5 is configured to extract the selected light P2 from the incidence side of the excitation light, therefore, it is unneeded to place an optical element for extracting the selected light on a transparent plate 7 side. This leads to downsizing the optical system. In other words, it is possible to manufacture a projection device including a light and compact-size light source unit h the wavelength converter 5 which can reduce heat accumulation due to energy loss and energy absorption by the wavelength conversion to a minimum.

Moreover, a cooling path can be provided in a space near the transparent plate 7 to blow air, as indicated by a broken line in FIG. 1. Thereby, the transparent plate 7 can be directly or indirectly cooled. This can enhance cooling efficiency of the wavelength converter 5 and efficiently discharge the heat accumulated in the wavelength converter 5. It is able to further prevent a decrease in the wavelength conversion efficiency from the excitation light to the fluorescence.

Further, according to the first embodiment, owing to the condenser lens 4 provided between the optical path separator 3 and wavelength converter 5 to collect the laser beam P1 and irradiate the wavelength converter 5 and collect the selected light 5 and guide it to the optical path separator 3, the use efficiency of the laser beam P1 and selected light P2 can be also improved.

### Second Embodiment

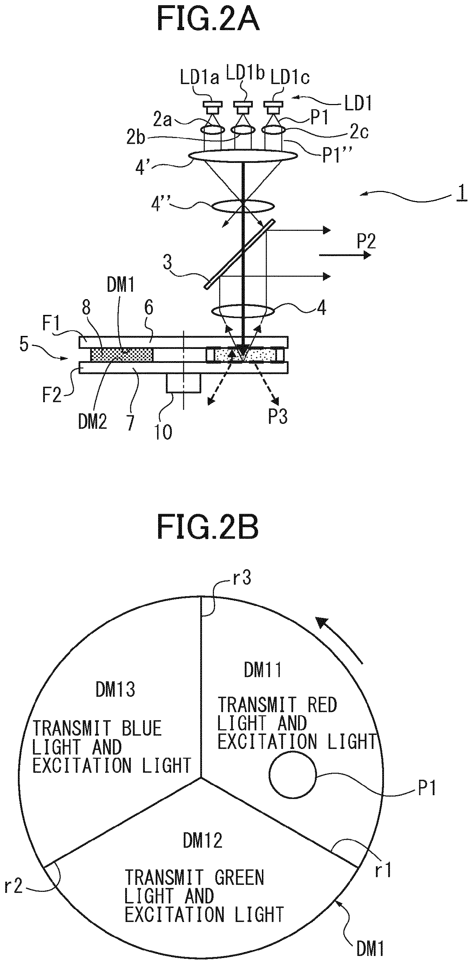

FIG. 2A to FIG. 4D schematically shows the light source unit 1 according to a second embodiment. In the present embodiment laser diodes LD1a to LD1c are used for the excitation light source of the light source unit 1.

Coupling lenses 2a to 2c are provided corresponding to the laser diodes LD1a to LD1c, to convert the laser beam P1 to the parallel beam P1".

A condenser lens 4' is provided in a traveling direction of the laser beam P1 to converge the parallel beam P1" on a single point. A collimator lens 4" is provided between the optical path separator 3 and the condenser lens 4' to convert the converged laser beam P1 to the parallel beam P1" again.

The wavelength converter 5 comprises a disc-shape second filter F2 attached to a rotational shaft of a drive motor 10, a disc-shape first filter F1, and a ring-like wavelength converting material 8. The wavelength converter 5 is rotated by the drive motor 10.

The dichroic mirror film DM1 formed on the transparent plate 6 is divided into three segmented regions DM11, DM 12, DM13 of the same fan shape in a rotational direction of the rotational shaft, as shown in FIGs. 2B, 3B, 4B.

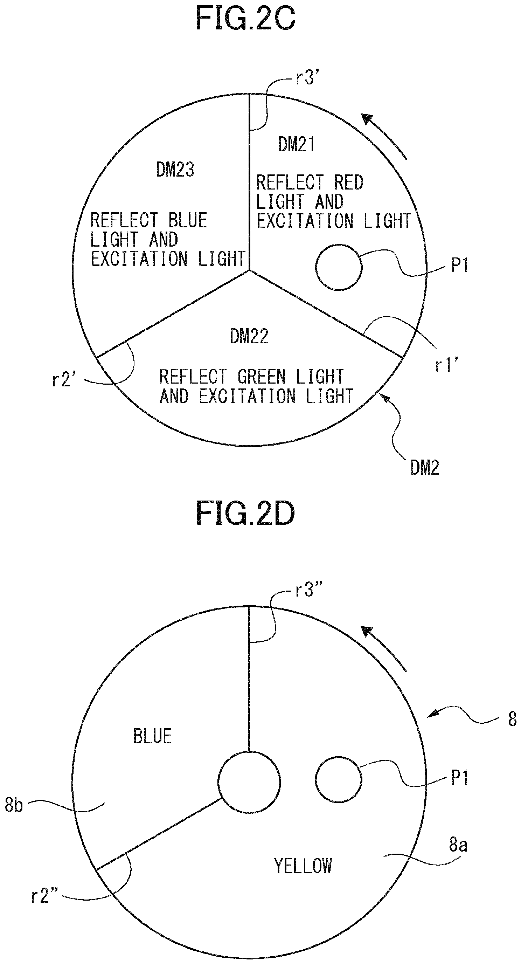

Likewise, the dichroic mirror film DM2 formed on the transparent plate 7 is divided into three segmented regions of the same fan shape DM21, DM 22, DM23 in a rotational direction of the rotational shaft, as shown in FIGs. 2C, 3C, 4C. The ring-like wavelength converting material 8 is comprised of fan-shape fluorescent regions 8a, 8b, as shown in FIGs. 2D, 3D, 4D.

In FIGs. 2B, 3B, 4B border lines r1, r2, r3 are defined between the segmented regions DM11, DM12, between the segmented regions DM12, DM13, and between the segmented regions DM13 and DM11, respectively.

In FIGs. 2C, 3C, 4C border lines r1', r2', r3' are defined between the segmented regions DM21, DM22, between the segmented regions DM22, DM23, and between the segmented regions DM23 and DM21, respectively.

In FIGs. 2D, 3D, 4D border lines r2", r3" are defined between the fluorescent regions 8a, 8b. The segmented regions DM11 to DM13 correspond to the segmented regions DM21 to DM23 and their border lines r1 to r3 and r1' to r3' match each other, respectively.

The fluorescent regions 8a, 8b are disposed between the first and second filters F1, F2 so that the border line r2" matches the border lines r2, r2' and the border line r3" matches the border lines r3, r3'.

In the second embodiment the angle of the arcs of the segmented regions DM11 to DM13 and DM21 to DM23 is set to 120 degrees, that of the fluorescent region 8a is set to 240 degrees and that of the fluorescent region 8b is set to 120 degrees.

The optical properties of the optical path separator 3 and condenser lens 4 are unchanged from the first embodiment. The segmented region DM11 transmits the laser beam P1 and red light as the selected light P2 and reflects fluorescence other than the red light as the non-selected light P3.

The segmented region DM12 is a selected-light transmitting region having optical property to transmit the laser beam P1 and green light as the selected light P2 and to reflect fluorescence other than the green light as non-selected light P3. The segmented region DM13 is a selected-light transmitting region having optical property to transmit the laser beam P1 and blue light as the selected light P2 and reflect fluorescence other than the blue light as non-selected light P3.

The segmented region DM21 opposes the segmented region DM11 and is a selected-light reflecting region having optical property to reflect the laser beam P1 and red light as the selected light P2 and reflect fluorescence other than the red light as non-selected light P3.

The segmented region DM22 opposes the segmented region DM12 and is a selected-light reflecting region having optical property to reflect the laser beam P1 and green light as the selected light P2 and reflect fluorescence other than the green light as non-selected light P3.

The segmented region DM23 opposes the segmented region DM13 and is a selected-light reflecting region having optical property to reflect the laser beam P1 and blue light as the selected light P2 and reflect fluorescence other than the blue light as non-selected light P3.

The fluorescent region 8a has fluorescent property to generate fluorescent light in a yellow wavelength range when irradiated with the laser beam P1. The fluorescent region 8b has fluorescent property to generate fluorescent light in a blue wavelength range when irradiated with the laser beam P1.

As shown in FIGs. 2A to 2D, fluorescence of yellow component is generated by the laser beam P1 irradiating the segmented regions DM11, DM21 and fluorescent region 8a.

Among the fluorescence of yellow component traveling to the segmented region DM11, the red light transmits through the segmented region DM11, focuses on the condenser lens 4, and is reflected by the optical path separator 3 as the selected light P2 to a not-shown illumination system. The laser beam P1 transmits through the optical path separator 3 and is radiated as in the first embodiment.

The fluorescence of yellow component other than the red light is reflected by the segmented region DM 11 to the segmented region DM21 as the non-selected light P3 and radiated through the segmented region DM21.

Among the fluorescence of yellow component traveling to the segmented region DM21, the red light is reflected by the segmented region DM21 to the segmented region DM11 as the selected light P2, transmits through the segmented region DM11, and is guided to the illumination system.

The fluorescence (green fluorescence) of yellow component other than the red light transmits through the segmented region DM 21 as the non-selected light P3 and is radiated.

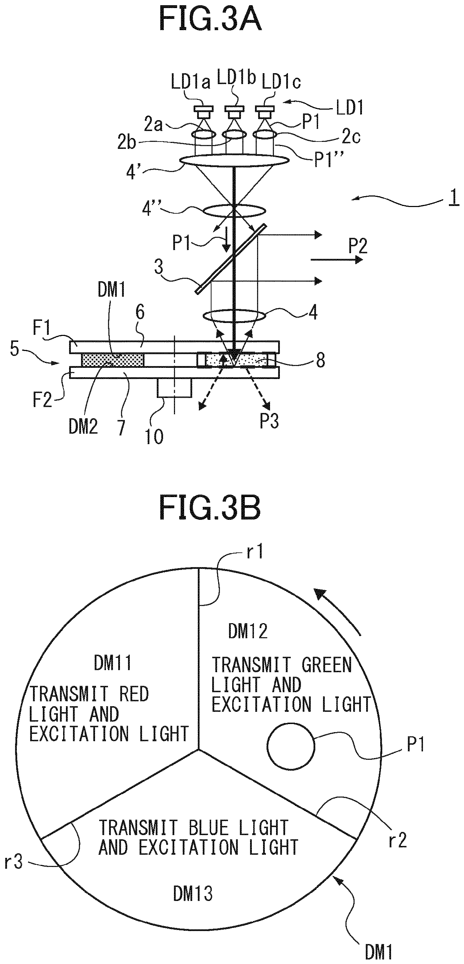

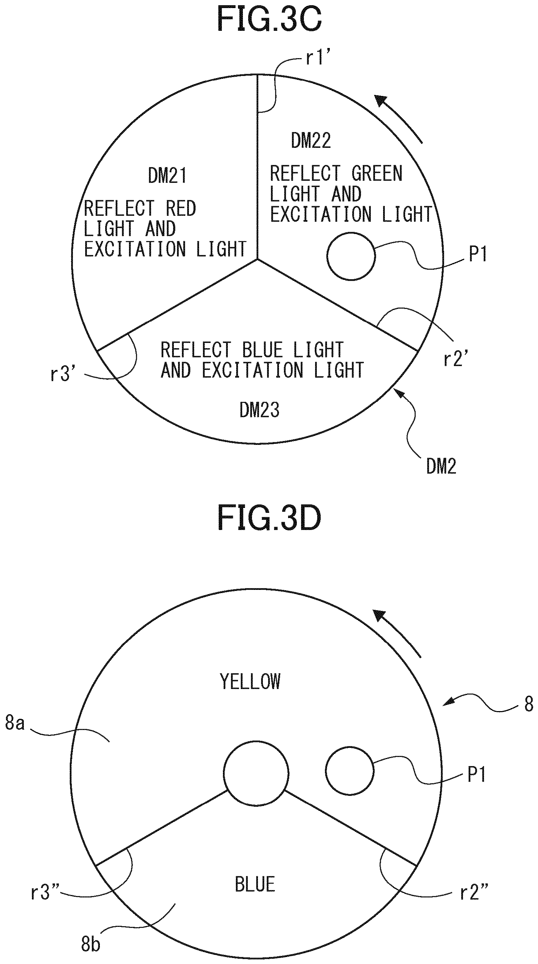

As shown in FIGs. 3A to 3D, green fluorescence is generated by the laser beam P1 irradiating the segmented regions DM12, DM22 and fluorescent region 8a, and guided as the selected light P2 to the illumination system. The fluorescence (red fluorescence) other than the green fluorescence as the non-selected light P3 is radiated through the segmented region DM22.

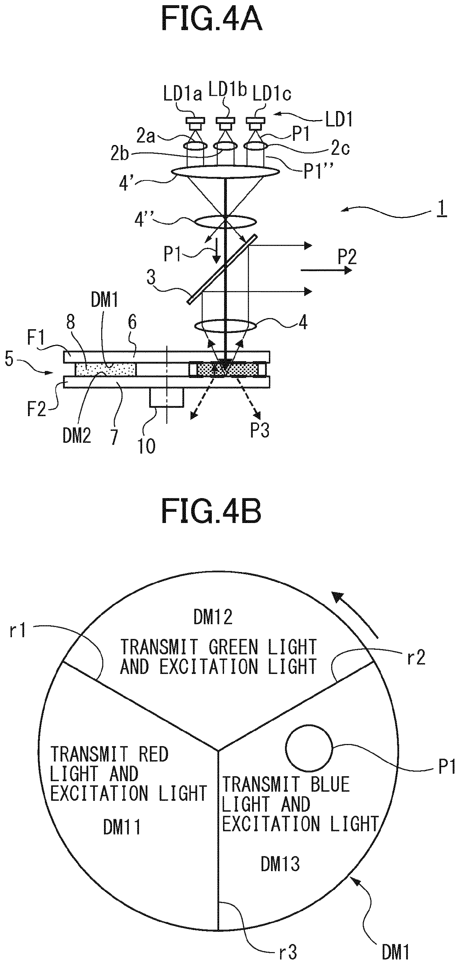

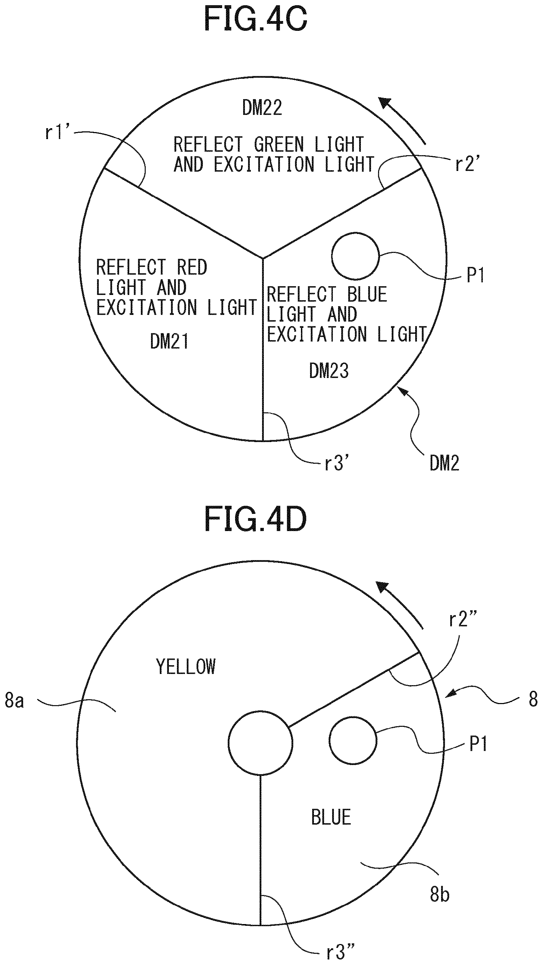

As shown in FIGs. 4A to 4D, blue fluorescence is generated as the selected light P2 by the laser beam P1 irradiating the segmented regions DM13, DM23 and fluorescent region 8b. It travels through the segmented region DM13 and is guided to the illumination system as the selected light P2.

The blue fluorescence travels to the segmented region DM 23 and is reflected thereby to the segmented region DM13 and guided as the selected light P2 to the illumination system through the segmented region DM13.

In the second embodiment the segmented region DM 23 needs to have only the optical property to reflect the blue light and laser beam P1 since the fluorescent region 8b is made of a fluorescent material which generates fluorescence of blue component. This facilitates the optical design of the segmented region DM 23.

Meanwhile, the fluorescent region 8a is made of a fluorescent material generating fluorescence of yellow component. When it does not include a fluorescent material generating fluorescence of blue component, the segmented regions DM21, DM22 do not need to have the optical property to transmit the fluorescence of blue component as the non-selected light P3. This facilitates the optical design of the segmented regions DM21, DM22.

According to the second embodiment, red, green, and blue light can be generated time-divisionally by using the laser diode LD1 (excitation light source) with a single wavelength rotating the wavelength converter 5 around the rotational shaft of the drive motor 10 at constant velocity, for example.

### Third Embodiment

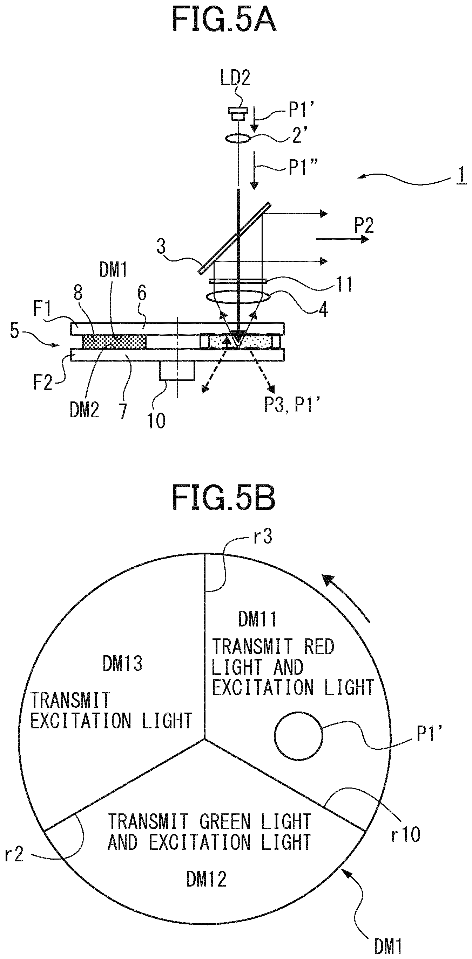

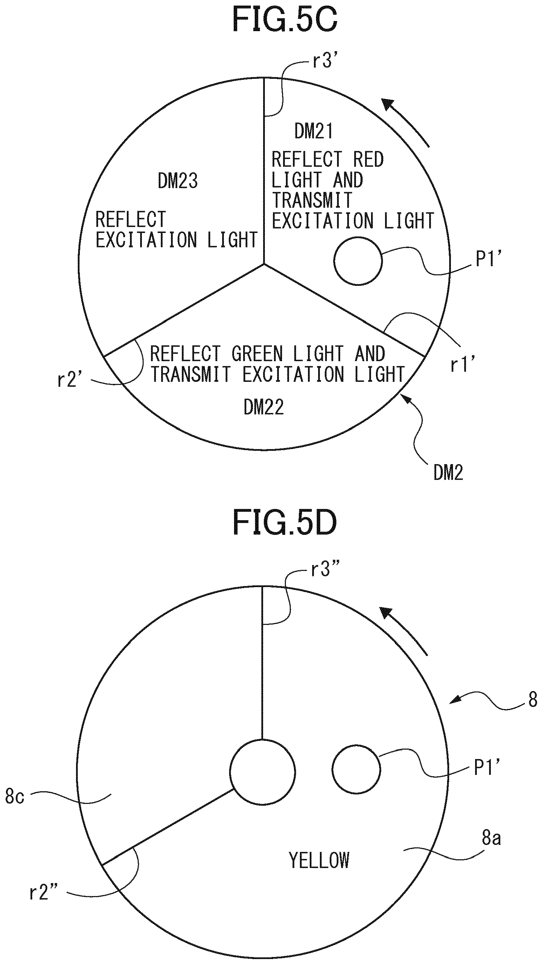

The light source unit 1 according to a third embodiment is described referring to FIG. 5A to FIG. 7D. As shown in FIGs. 5A, 6A, 7A, the wavelength converter 5 comprises the disc-shape second filter F2 attached to the rotational shaft of the drive motor 10, the disc-shape first filter F1, and the ring-like wavelength converting material 8, as in the second embodiment.

The wavelength converting material 8 includes the fan-shape fluorescent region 8a generating fluorescence of yellow component alone. A non-fluorescent region 8 is provided between the segmented regions DM13 and DM23. The structures of the first filter F1 and second filter F2 are the same as those in the second embodiment and the same elements are given the same reference codes.

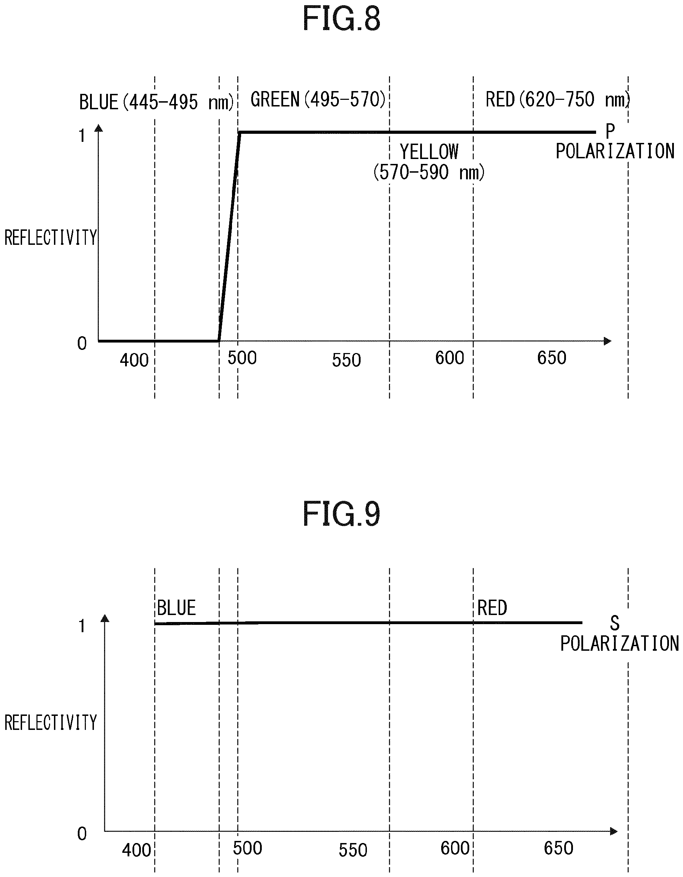

According to the third embodiment a laser diode LD2 and a coupling lens 2' are used. The laser diode LD2 is an excitation light source and generates a blue laser beam PI' as excitation light. The optical path separator 3 functions as a beam splitter and has a reflective characteristic as shown in FIGs. 8, 9.

FIG. 8 shows a reflective characteristic of P polarization of the optical path separator 3. The reflective characteristic is such that light in a blue wavelength band (445 nm to 495 nm) is almost totally transmitted while light in a green wavelength band (495 nm to 570 nm), in a yellow wavelength band (570 nm to 750 nm), and in a red wavelength band (620 nm to 750 nm) is totally reflected.

FIG. 9 shows a reflective characteristic of S polarization of the optical path separator 3. The reflective characteristic is such that light in a blue wavelength band (445 nm to 495 nm) to a red wavelength band (620 nm to 750 nm) is totally reflected. The direction of S polarization is different from that of P polarization by 90 degrees.

A 1/4λ wave plate 11 is disposed between the optical path separator 3 and the condenser lens 4 to convert linear polarized light thereby to circular polarized light and circular polarized light to linear polarized light.

The excitation light (blue light) passes through the optical path separator 3 to the 4/1λ wave plate 11, is converted thereby to a circular polarized laser beam PI' and collected by the condenser lens 4 to irradiate the wavelength converter 5.

In the third embodiment the segmented region DM11 has optical property to transmit red light as the selected light P2 and the laser beam PI' and reflect green light as the non-selected light P3.

The segmented region DM12 has optical property to transmit the laser beam PI' and green light as the selected light P2 and reflect red light as the non-selected light P3. The segmented region DM13 has optical property to transmit at least the laser beam PI'.

The segmented region DM21 has optical property to reflect red light as the selected light P2 and transmit fluorescence in a green wavelength range as the non-selected light P3 and the excitation light (blue light) P1'.

The segmented region DM22 has optical property to reflect fluorescence in a green wavelength range as the selected light P2 and transmit the laser beam P1' and fluorescence in a red wavelength range as the non-selected light P3. The segmented region D23 has optical property to reflect at least the laser beam P1'.

In the third embodiment the fluorescence of yellow component is generated when the laser beam PI' hits the segmented regions DM11, DM21 and fluorescent region 8a of the wavelength converter, as shown in FIGs. 5A to 5D.

Of the fluorescence of yellow component traveling to the segmented region DM11, red light travels through the segmented region DM11, is collected by the condenser lens 4, transmits through the 1/4λ wave plate 11, and is reflected as the selected light P2 by the optical path separator 3 to the illumination system, as in the second embodiment.

Then, fluorescence other than the red light is reflected by the segmented region DM11 to the segmented region DM21 as the non-selected light P3, transmits therethrough and is radiated. The excitation light is also radiated through the segmented region DM21.

Of the fluorescence of yellow component traveling to the segmented region DM21, red light is reflected by the segmented region DM21 to the segmented region DM11 as the selected light P2 and guided to the illumination system through the segmented region DM11.

Fluorescence (green light) other than the red light transmits through the segmented region DM21 as the non-selected light P3 and is radiated.

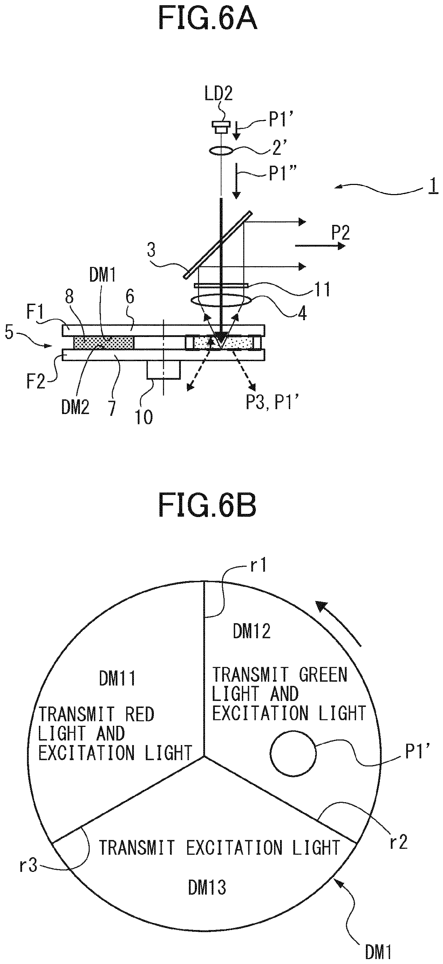

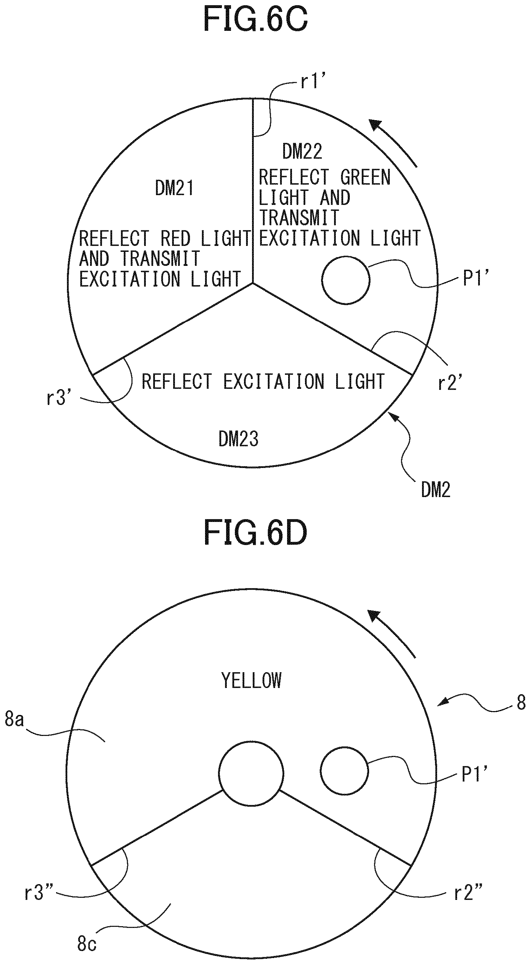

Referring to FIGs. 6A to 6D, similarly, when the laser beam P1' hits the segmented regions DM12, DM22 and fluorescent region 8a, green light is guided to the illumination system as the selected light P2, fluorescence (red light) other than the green light as the non-selected light P3 and the excitation light PI' (blue light) are radiated through the segmented region DM22.

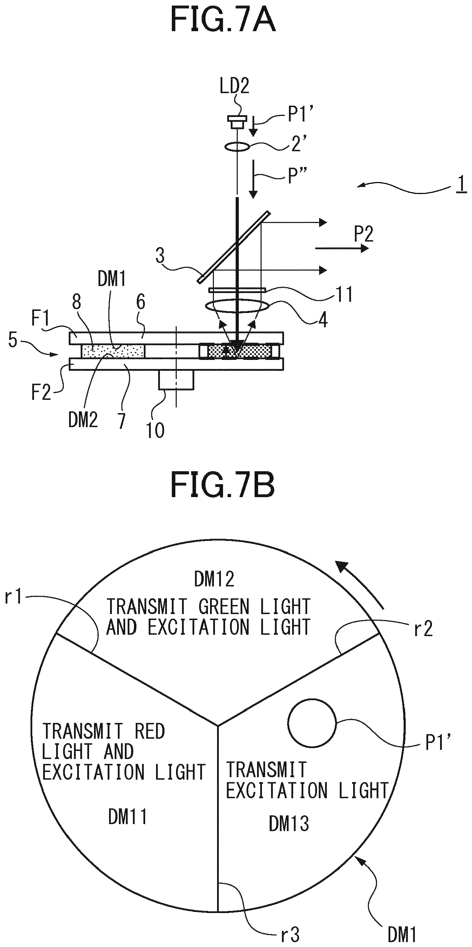

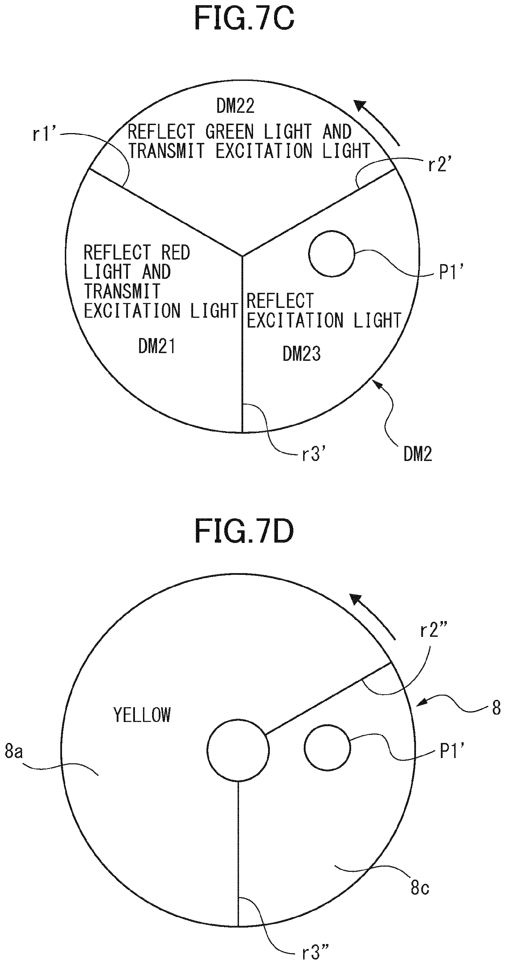

Referring to FIGs. 7A to 7D, when the laser beam P1' hits the segmented regions DM13, DM23, the excitation light PI' (blue light) is reflected by the segmented region DM23 to the segmented region DM13 and guided to the condenser lens 4 through the segmented region DM13.

Circular polarized excitation light PI' (blue light) collected by the condenser lens 4 is converted to S polarization by the 1/4λ wave plate 11 and guided to the optical path separator 3. The laser beam PI' of S polarization is reflected by the optical path separator 3 to the illumination system.

According to the third embodiment, red, green, and blue light can be generated time-divisionally by using the laser diode LD2 (excitation light source) with a single wavelength rotating the wavelength converter 5 around the rotational shaft of the drive motor 10 at constant velocity, as in the second embodiment.

Moreover, according to the present embodiment, by use of the blue light source generating blue light as the excitation light source, pure blue light can be generated for forming a color projection image.

### First Modification

In the third embodiment the excitation light source is the laser diode LD2 which generates a linear polarized laser beam. Alternatively, with use of LEDs generating blue light but having different polarization directions, a combination of a not-shown 1/2λ, wave plate and a polarization beam splitter can be used as excitation light source to align the polarization directions.

### Second Modification

In the third embodiment the segmented region DM23 is the one to reflect blue light. Alternatively, the segmented region DM13 can be configured to reflect the blue light.

### Third Modification

In the third embodiment by use of a laser beam PI' with good linearity, speckle may occur due to spatial coherency, causing unevenness in illumination.

In view of this, a scattering element (not shown) can be provided on the non-fluorescent region 8c between the segmented regions DM13 and DM23. Thereby, the laser beam P1' is scattered by the scattering element to reduce its linearity, making it possible to reduce uneven illumination.

Alternatively, a reflective scattering surface can be provided on at least one of the segmented regions DM13, DM23 in place of the scattering element.

Thus, the reflective scatting surfaces of the segmented regions DM13, DM23 can improve scattering effects further than the scattering element. Also, it is more preferable in terms of safety since a drop-off or the like of the scattering element does not need to be considered.

### Fourth Embodiment

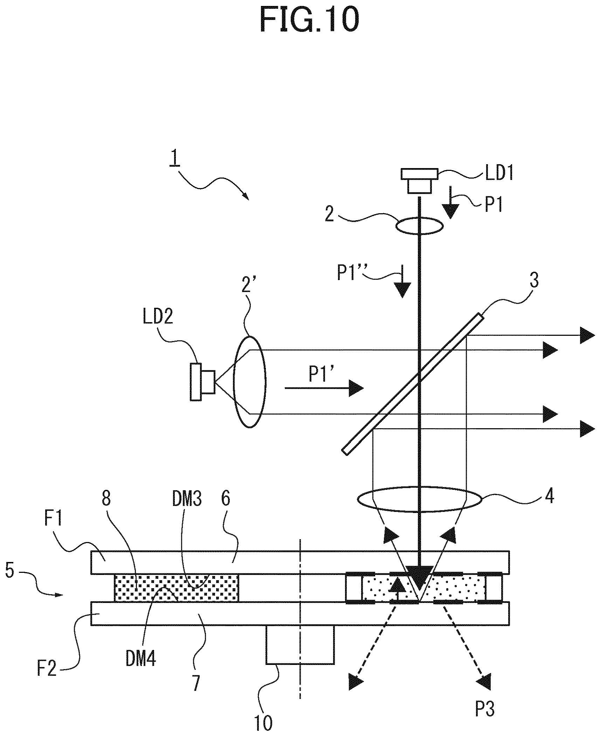

FIG. 10 schematically shows the light source unit 1 according to a fourth embodiment. In the present embodiment the excitation light source is the laser diode LD1 in a ultraviolet wavelength and the coupling lens 2. The blue light source is the laser diode LD2 generating blue light and the coupling lens 2'. In place of the laser diode LD2, an LED generating blue light can be also used.

The optical path separator 3 has optical property to transmit the laser beam P1 in a ultraviolet wavelength band and the laser beam PI' in a blue wavelength band and reflect light in a green to red wavelength band. The optical path separator 3 also functions to allow the optical paths of the fluorescence from the wavelength converter 5 and the laser beam PI' from the laser diode LD2 to math each other. The wavelength converter 5 is comprised of the first and second filters F1, F2 and wavelength converting material 8.

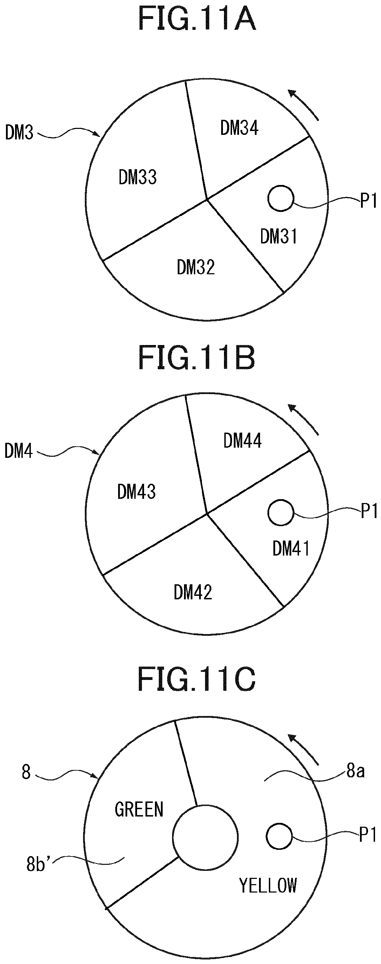

The first filter F1 includes a dichroic mirror film DM3 which is divided into four segmented regions DM31 to DM34 as shown in FIG. 11A.

The second filter F2 includes a dichroic mirror film DM4 which is divided into four segmented regions DM41 to DM44 as shown in FIG. 11B.

The shapes of the segmented regions DM31 to DM 34 are the same as those of the segmented regions DM41 to DM 44, respectively, and these regions are disposed to correspond to each other.

Referring to FIG. 11C, the wavelength converting material 8 comprises the fluorescent region 8a generating fluorescence of yellow component and a fluorescent region 8b' generating fluorescence of green component.

The fluorescent region 8b' is disposed between the segmented regions DM33 and DM43 and the fluorescent region 8a is disposed between a fan-shape area of the segmented regions DM32, DM31, DM34 and a fan-shape area of the segmented regions DM42, DM41, DM44.

In the present embodiment the laser diode LD1 is turned on in the fan-shape areas of the segmented regions DM31 to DM33 and DM41 to DM43 and turned off in the segmented regions DM 34 and DM44.

Meanwhile, the laser diode LD2 is turned off in the fan-shape areas of the segmented regions DM31 to DM33 and DM41 to DM43 and turned on in the segmented regions DM 34 and DM44.

In the present embodiment the fluorescent region 8a of yellow component is disposed in the fan-shape area of the segmented regions DM34, DM44. The segmented regions DM34, DM44 are not irradiated with the laser beam P1 from the laser diode LD1. Accordingly, the fluorescent region 8a of yellow component does not have to be disposed on the segmented regions DM34, DM44.

The segmented region DM31 has optical property to transmit the laser beam P1 and fluorescence of red component and reflect fluorescence of green component. The segmented region DM41 has optical property to reflect the laser beam P1 and fluorescence of red component and transmit fluorescence of green component.

The segmented region DM32 has optical property to transmit the laser beam P1 and fluorescence of yellow component. The segmented region DM42 has optical property to reflect the laser beam P1 and fluorescence of yellow component. The segmented region DM32 comprises a dichroic mirror film through which the laser beam P1 and fluorescence of yellow component transmit. Alternatively, it can be a transparent region.

The segmented region DM33 has optical property to transmit the laser beam P1 and fluorescence of green component. The segmented region DM43 has optical property to reflect the laser beam P1 and fluorescence of green component.

Herein, the segmented region DM33 comprises a dichroic mirror film through which the laser beam P1 and fluorescence of green component transmit. Alternatively, it can be a transparent region.

The segmented regions DM34, DM44 are both dichroic mirror films. However, these regions of the wavelength converter 5 are not irradiated with the laser beam so that they can be transparent regions.

According to the fourth embodiment when the laser beam P1 hits the segmented regions DM31, DM41 and fluorescent region 8a, red fluorescence is extracted as the selected light P2, green fluorescence is radiated through the segmented region DM41 as the non-selected light P3, and the laser beam P1 reflected by the segmented region DM41 is radiated through the optical path separator 3.

Further, when the laser beam P1 hits the segmented regions DM32, DM42 and fluorescent region 8a, yellow fluorescence is extracted as the selected light P2, yellow fluorescence reflected by the segmented region 42 is also extracted as the selected light P2, and the laser beam P1 reflected by the segmented region DM4 is radiated through the optical path separator 3.

When the laser beam P1 hits the segmented regions DM33, DM43 and fluorescent region 8b', green fluorescence is extracted as the selected light P2, green fluorescence reflected by the segmented region DM43 is also extracted as the selected light P2, and the laser beam P1 reflected by the segmented region DM43 is radiated through the optical path separator 3.

When the segmented regions DM31, DM44 and fluorescent region 8a are positioned on the optical path of the laser beam P1, the laser diode LD1 is turned off and the laser diode LD2 is turned on. Thereby, the blue laser beam PI' is emitted. During one rotation of the wavelength converter 5, four-color laser beams of red, yellow, green, blue are time-divisionally extracted.

### Fifth Embodiment

FIGs. 12A, 12B show the light source unit 1 according to a fifth embodiment. The excitation light source is a plurality of laser diodes LD2 generating blue light and coupling lenses 2a', 2b', 2c', as shown in FIG. 12A.

A condenser lens 12 and an optical path splitter 13 are provided on the optical path of the laser beam P1'. The condenser lens 12 collects a parallel beam P1". The optical path splitter 13 is comprised of the drive motor 14 and an optical splitting plate 15. The optical splitting plate 15 includes a reflection region 15a and a transmission region 15b, as shown in FIG. 12B. A reflection mirror 16 is provided on an optical path in a reflection direction of the optical splitting plate 15.

A collimator lens 17 is disposed between the optical splitting plate 15 and the reflection mirror 16 to convert the laser beam PI' reflected by the reflection region 15a to a parallel beam.

Further, a collimator lens 18 is disposed on an optical path in a transmission direction of the transmission region 15b of the optical splitting plate 15 to convert the laser beam P1' having transmitted through the transmission region 15b to a parallel beam.

The parallel beam PI' converted by the collimator lens 18 is guided to the condenser lens 4 via the optical path separator 3. The condenser lens 4 collects the laser beam P1' to irradiate the wavelength converter 5.

The optical path separator 3 has optical property to transmit the laser beam PI' (blue light) and reflect red light and green light. A dichroic mirror 19 is provided as an optical path combiner on optical paths in a reflection direction of the reflection mirror 16 and in a reflection direction of the optical path separator 3, to guide lights of red component, green component, and blue component to an illumination system of a later-described projection device.

The wavelength converter 5 is rotated in synchronization with the optical splitting plate 15 and comprises a first filter F1 and a second filter F2, as shown in FIGs. 13A, 13B. In the present embodiment the wavelength converting material 8 is made from a fluorescent material generating fluorescence of yellow component.

The dichroic mirror film DM1 is divided into three segmented regions DM51 to DM53 while the dichroic mirror film DM2 is divided into three segmented regions DM61 to DM63.

The segmented regions DM51, DM61 correspond to the reflection region 15a and the segmented regions DM52, DM62, DM53, DM63 correspond to the transmission region 15b.

The segmented regions DM51, DM61 are not irradiated with the blue laser beam P1' so that their optical property related to the excitation light, selected light P2, and non-selected light P3 is not limited.

When the laser beam PI' from the laser diode LD2 hits the reflection region 15a of the optical splitting plate 15, the laser beam PI' is reflected by the reflection region 15a, collected by the condenser lens 17, and guided as blue light to a later-described illumination system via the reflection mirror 16 and the dichroic mirror 19.

When the laser beam PI' from the laser diode LD2 hits the transmission region 15b of the optical splitting plate 15, the laser beam P1' transmits through the transmission region 15b and is guided to the wavelength converter 5 via the condenser lens 18, optical path separator 3, and condenser lens 4.

When the laser beam PI' from the laser diode LD2 as excitation light hits the segmented regions DM52, DM62 and wavelength converting material 8, the wavelength converting material 8 generates fluorescence of yellow component.

The segmented region DM52 has optical property to transmit the laser beam P1' as the excitation light and fluorescence of red component as the selected light P2 and reflect fluorescence of green component as the non-selected light P3.

The segmented region DM62 has optical property to reflect the laser beam P1' and fluorescence of red component as the selected light P2 and transmit fluorescence of green component as the non-selected light P3.

The segmented region DM53 has optical property to transmit the laser beam PI' and fluorescence of green component as the selected light P2 and reflect fluorescence of red component as the non-selected light P3.

The segmented region DM63 has optical property to reflect the laser beam P1' and fluorescence of green component as the selected light P2 and transmit fluorescence of red component as the non-selected light P3.

Thus, when the laser beam PI' irradiates the segmented regions DM52, DM62, wavelength converting material 8, the fluorescence of red component is extracted from the wavelength converting material 8 as the selected light P2 and guided to a later-described illumination system via the condenser lens 4, optical path separator 3, and dichroic mirror 19. The fluorescence of green component is radiated as the non-selected light P3 to outside from the second filter F2.

Further, when the laser beam PI' irradiates the segmented regions DM53, DM63 and wavelength converting material 8, the fluorescence of green component is extracted from the wavelength converting material 8 as the selected light P2 and guided to a later-described illumination system via the condenser lens 4, optical path separator 3, and dichroic mirror 19. The fluorescence of red component is radiated as the non-selected light P3 to outside from the second filter F2.

### Sixth Embodiment

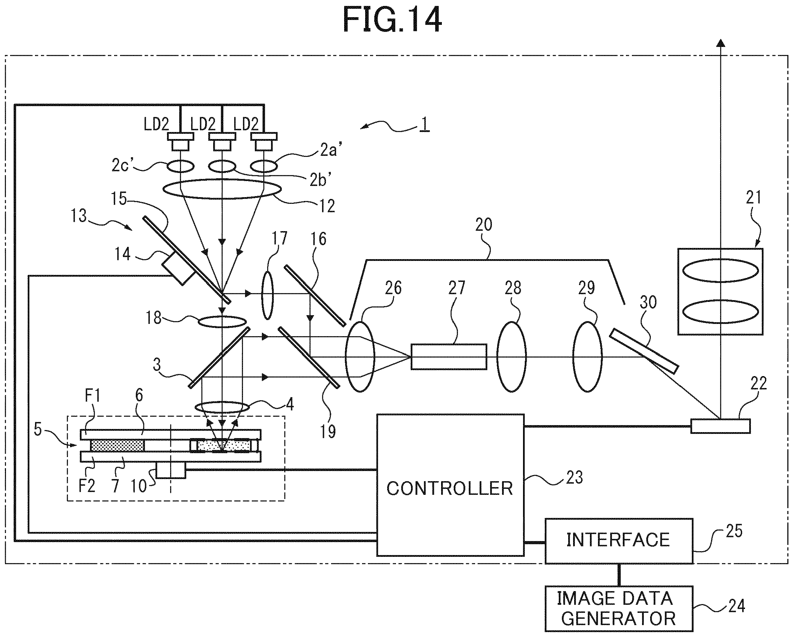

FIG. 14 schematically shows a projection device incorporating the light source unit 1 according to the fifth embodiment. The projection device comprises an illumination system 20, a projection lens 21, an image generator 22, and a controller 23. The image generator 22 is, for example, a DMD (digital micro device).

The controller 23 receives image information from an image data generator 24 via an interface 25. The controller 23 controls the rotation of the wavelength converter 5 and the drive motor 14, the turning-on and -off of the laser diode LD2, and the operation of the image generator 22.

The illumination system 20 comprises a condenser lens 26, an optical tunnel 27, a condenser lens 28, a relay lens 29, and a reflective mirror 30. The blue laser beam P1', red selected light P, and green selected light P2 are guided to the condenser lens 26, optical tunnel 27, condenser lens 28, relay lens 29, reflective mirror 30, and image generator 22. Light including image information generated from the image generator 22 is guided to the projection lens 21 to project an image on a not-shown screen with the projection lens 21.

The projection device can be configured to include a not-shown cooling air path on a second filter F2 side of the wavelength converter 5 to cool the wavelength converter 5. Thereby, the cooling efficiency of the wavelength converter 5 can be enhanced.

### Seventh Embodiment

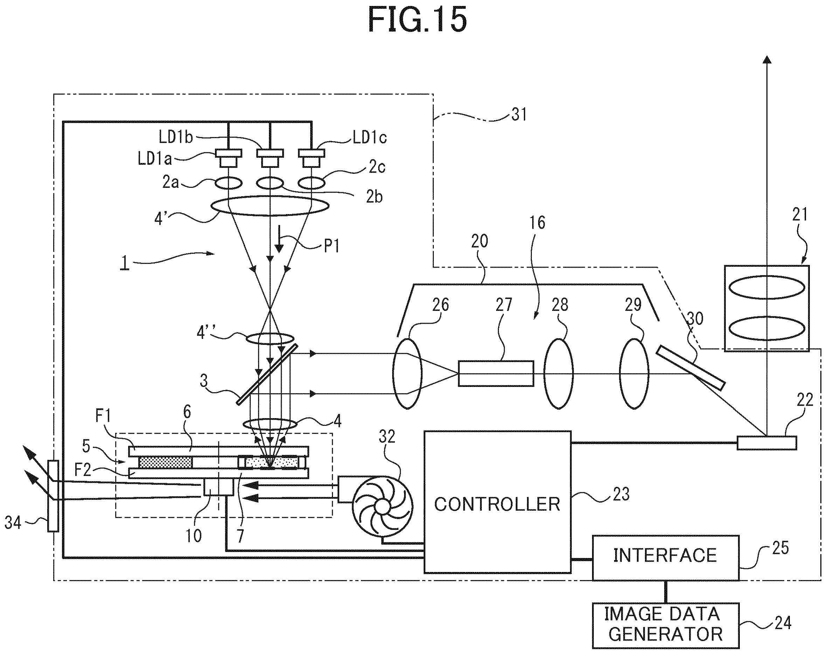

FIG. 15 shows another example of a projection device which incorporates the light source unit 1 according to the second embodiment. The same elements are given the same reference codes of the second embodiment and a detailed description thereof is omitted. Also, the same elements as those in FIG. 14 are given the same reference codes and a detailed description is omitted.

The projection device according to the present embodiment comprises a cooling fan 32, for example, a sirocco fan, inside a housing 31. The cooling fan 32 forms a cooling air path on the second filter F2 side of the wavelength converter 5.

The housing 31 is provided with an exhaust port through which air warmed by heat radiation from the laser beam P1 and wavelength converter 5 and air warmed by the non-selected light P3 are forcibly discharged. Thereby, the wavelength converter is cooled down so that a deterioration of the optical property due to heat can be prevented.

Further, it is preferable to configure the fan 32 so as to directly blow air to the second filter F2 of the wavelength converter 5. Thereby, the cooling efficiency of the wavelength converter 5 can be further improved.

Although the present invention has been described in terms of exemplary embodiments, it is not limited thereto. It should be appreciated that variations or modifications may be made in the embodiments described by persons skilled in the art without departing from the scope of the present invention as defined by the following claims.

## Claims

1. A wavelength converter (5) comprising:
a wavelength converting material (8) arranged to generate light with a different wavelength from a wavelength of excitation light;
a first filter (F1) provided at an incidence side of the excitation light, including a transmission region for transmitting the excitation light and light with a certain wavelength among the light with the different wavelength as selected light (P2) from the incidence side of the excitation light and for reflecting light other than the selected light as non-selected light (P3); and
a second filter (F2) provided opposite to the first filter, placing the wavelength converting material in-between and including a reflection region for reflecting at least the selected light and **characterized in that** the second filter is arranged to transmit the non-selected light.

2. An optical system comprising:
the wavelength converter (5) according to claim 1; and
an optical path separator (3) provided at an incidence side of the wavelength converter to transmit the excitation light and reflect the selected light from the wavelength converter.

3. The optical system according to claim 2, further comprising
a condenser lens (4) provided between the optical path separator and the wavelength converter, to collect the excitation light to irradiate the wavelength converter and collect and guide the selected light to the optical path separator.

4. A light source unit (1) comprising:
an excitation light source to emit excitation light; and
the optical system according to claim 3.

5. The light source unit according to claim 4, wherein:
the wavelength converter is driven to rotate;
the first filter and the second filter are each divided into fan-shape regions in a rotational direction; and
at least one of the fan-shape regions is set to be the selected-light transmitting region, and another one of the regions opposing the selected-light transmitting region is set to be the selected-light reflecting region.

6. The light source unit according to claim 5, wherein
the selected-light reflecting region has optical property to reflect the excitation light.

7. The light source unit according to claim 5, wherein:
the color of the excitation light is blue;
the wavelength converting material (8) is comprised of a yellow-colored fluorescent region (8a) and a non-fluorescent region (8c);
the first filter (F1) includes a first region (DM11) that transmits the excitation light and red light and reflects the green light, a second region (DM12) that transmits the excitation light and green light and reflects the red light, and a third region (DM13) that transmits at least the excitation light;
the second filter (F2) includes a fourth region (DM21) that reflects the red light and transmits the green light and excitation light, a fifth region (DM22) that reflects the green light and transmits the red light and excitation light, and a sixth region (DM23) that reflects at least the excitation light;
the yellow-colored fluorescent region (8a) is provided between the first region (DM11) and the fourth region (DM21);
the yellow-colored fluorescent region (8a) is provided between the second region (DM12) and the fifth region (DM22); and
the non-fluorescent region (8c) is provided between the third region (DM13) and the sixth region (DM23)

8. The light source unit according to claim 5, wherein:
the excitation light source is configured to generate excitation light in a ultraviolet wavelength range;
the wavelength converting material includes a first fluorescent region for generating fluorescence of a yellow component by the excitation light in a ultraviolet wavelength range and a second fluorescent region for generating fluorescence of a blue component;
the first filter includes a first selected-light transmitting region for transmitting the excitation light and fluorescence in a red wavelength range, a second selected-light transmitting region for transmitting the excitation light and fluorescence in a green wavelength range, and a third selected-light transmitting region for transmitting the excitation light and fluorescence in a blue wavelength range; and
the second filter includes a first selected-light reflecting region for reflecting the excitation light and fluorescence in a red wavelength range and transmitting fluorescence in a green wavelength range, a second selected-light reflecting region for reflecting the excitation light and fluorescence in a green wavelength range and transmitting fluorescence in a red wavelength range, and a third reflection range for reflecting the excitation light and fluorescence in a blue wavelength range.

9. The light source unit according to claim 5, wherein
the excitation light source is configured to generate blue light of linear polarization;
the wavelength converting material includes a fluorescent region to generate fluorescence of a yellow component by the excitation light in a blue wavelength range and a non-fluorescent region;
the first filter includes a first selected-light transmitting region for transmitting the excitation light and fluorescence in a red wavelength range and a second selected-light transmitting region for transmitting the excitation light and fluorescence in a green wavelength range;
the second filter includes a selected-light reflecting region for transmitting the excitation light and reflecting fluorescence in a red wavelength range and a third selected-light transmitting region for transmitting the excitation light and fluorescence in a green wavelength range;
the light source unit further comprises a wave plate (11) provided between the optical path separator and the wavelength converter to convert the blue light of linear polarization to blue light of circular polarization and convert the blue light of circular polarization to the blue light of linear polarization;
the optical path separator has optical property to transmit the blue light of linear polarization, and reflect blue light of linear polarization in a different polarization direction from that of the linear polarization by 90 degrees; and
at least one of the first and second filters includes a reflection region for reflecting the blue light to the optical path separator.

10. The light source unit according to claim 5, further comprising a blue light source to generate blue light, wherein
the excitation light source is configured to generate excitation light in a ultraviolet wavelength range;
when the blue light source is turned off, the excitation light source is turned on and the wavelength converter time-divisionally extracts at least red light and green light other than the blue light as the selected light; and
when the excitation light source is turned off, the blue light source is turned on and the wavelength converter time-divisionally extracts the blue light.

11. The light source unit according to claim 10, wherein
the wavelength converter includes a fan-shape region to extract fluorescence of a yellow component.

12. The light source unit according to claim 5, further comprising
an optical path splitter (13) provided between the excitation light source and the optical path separator, including a transmission region and a reflection region, wherein:
the excitation light source is a blue light source to generate blue light; and
the optical path splitter is configured to time-divisionally extract green light and red light as the selected light by guiding the blue light to the wavelength converter as the excitation light when one of the transmission region and the reflection region is positioned on an optical path of the blue light source, and to time-divisionally extract the blue light when the other of the transmission region and the reflection region is positioned on the optical path of the blue light source.

13. The light source unit according to one of claims 4 to 12, wherein
the first filter and the second filter of the wavelength converter each include a transparent plate (6, 7) made from sapphire.

14. A projection device comprising the wavelength converter according to one of claims 1 to 13.

15. The projection device according to claim 14, further comprising a cooling air path formed on a second filter side of the wavelength converter.

## Patentansprüche

1. Wellenlängenwandler (5), umfassend:
ein Wellenlängenwandlungsmaterial (8), das angeordnet ist, um Licht mit einer unterschiedlichen Wellengänge von einer Wellenlänge eines Anregungslichts zu erzeugen;
einen ersten Filter (F1), der an einer Einfallseite des Anregungslichts bereitgestellt ist, umfassend einen Übertragungsbereich zum Übertragen des Anregungslichts und von Licht mit einer bestimmten Wellenlänge von dem Licht mit der unterschiedlichen Wellenlänge als ausgewähltes Licht (P2) von der Einfallseite des Anregungslichts und zum Reflektieren von anderem Licht als dem ausgewählten Licht als nicht ausgewähltes Licht (P3); und
einen zweiten Filter (F2), der gegenüber dem ersten Filter bereitgestellt ist, wodurch das Wellenlängenwandlungsmaterial dazwischen platziert ist und umfassend einen Reflektionsbereich zum Reflektieren von mindestens dem ausgewählten Licht und **dadurch gekennzeichnet, dass** der zweite Filter angeordnet ist, um das nicht ausgewählte Licht zu übertragen.

2. Optisches System, umfassend:
den Wellenlängenwandler (5) nach Anspruch 1; und
eine Trennvorrichtung für einen optischen Pfad (3), die an einer Einfallseite des Wellenlängenwandlers bereitgestellt ist, um das Anregungslicht zu übertragen und das ausgewählte Licht von dem Wellenlängenwandler zu reflektieren.

3. Optisches System nach Anspruch 2, ferner umfassend
eine Kondensorlinse (4), die zwischen der Trennvorrichtung für einen optischen Pfad und dem Wellenlängenwandler bereitgestellt ist, um das Anregungslicht zu sammeln, um den Wellenlängenwandler zu bestrahlen und das ausgewählte Licht zu sammeln und zu der Trennvorrichtung für einen optischen Pfad zu führen.

4. Lichtquelle (1), umfassend:
eine Anregungslichtquelle, um Anregungslicht abzugeben; und
das optische System nach Anspruch 3.

5. Lichtquelle nach Anspruch 4, wobei:
der Wellenlängenwandler angetrieben wird, um sich zu drehen;
der erste Filter und der zweite Filter jeweils in fächerförmige Bereiche in einer Drehrichtung unterteilt sind; und
mindestens einer der fächerförmigen Bereiche eingestellt ist, um der Übertragungsbereich für das ausgewählte Licht zu sein und ein anderer der Bereiche, die dem Übertragungsbereich für das ausgewählte Licht gegenüberliegen, eingestellt ist, um der Reflektionsbereich für das ausgewählte Licht zu sein.

6. Lichtquelleneinheit nach Anspruch 5, wobei
der Reflektionsbereich für das ausgewählte Licht eine optische Eigenschaft zum Reflektieren des Anregungslichts aufweist.

7. Lichtquelleneinheit nach Anspruch 5, wobei:
die Farbe des Anregungslichts blau ist;
das Wellenlängenwandlungsmaterial (8) aus einem gelben Fluoreszenzbereich (8a) und einem Nicht-Fluoreszenzbereich (8c) besteht;
der erste Filter (F1) einen ersten Bereich (DM11), der das Anregungslicht und das rote Licht überträgt und das grüne Licht reflektiert, einen zweiten Bereich (DM12), der das Anregungslicht und das grüne Licht überträgt und das rote Licht reflektiert und einen dritten Bereich (DM13) umfasst, der mindestens das Anregungslicht überträgt;
der zweite Filter (F2) einen vierten Bereich (DM21), der das rote Licht reflektiert und das grüne Licht und das Anregungslicht überträgt, einen fünften Bereich (DM22), der das grüne Licht reflektiert und das rote Licht und das Anregungslicht überträgt, und einen sechsten Bereich (DM23) umfasst, der mindestens das Anregungslicht reflektiert;
der gelbe Fluoreszenzbereich (8a) zwischen dem ersten Bereich (DM11) und dem vierten Bereich (DM21) bereitgestellt ist;
der gelbe Fluoreszenzbereich (8a) zwischen dem zweiten Bereich (DM12) und dem fünften Bereich (DM22) bereitgestellt ist; und
der Nicht-Fluoreszenzbereich (8c) zwischen dem dritten Bereich (DM13) und dem sechsten Bereich (DM23) bereitgestellt ist.

8. Lichtquelleneinheit nach Anspruch 5, wobei:
die Anregungslichtquelle konfiguriert ist, Anregungslicht in einem ultravioletten Wellenlängenbereich zu erzeugen;
das Wellenlängenwandlungsmaterial einen ersten Fluoreszenzbereich zum Erzeugen von Fluoreszenz einer gelben Komponente durch das Anregungslicht in einem ultravioletten Wellenlängenbereich und einen zweiten Fluoreszenzbereich zum Erzeugen von Fluoreszenz einer blauen Komponente umfasst;
der erste Filter einen ersten Übertragungsbereich für das ausgewählte Licht zum Übertragen des Anregungslichts und der Fluoreszenz in einem roten Wellenlängenbereich, einen zweiten Übertragungsbereich für das ausgewählte Licht zum Übertragen des Anregungslichts und der Fluoreszenz in einem grünen Wellenlängenbereich und einen dritten Übertragungsbereich für das ausgewählte Licht zum Übertragen des Anregungslichts und der Fluoreszenz in einem blauen Wellenlängenbereich umfasst; und
der zweite Filter einen ersten Reflektionsbereich für das ausgewählte Licht zum Reflektieren des Anregungslichts und der Fluoreszenz in einem roten Wellenlängenbereich und zum Übertragen der Fluoreszenz in einem grünen Wellenlängenbereich, einen zweiten Reflektionsbereich für das ausgewählte Licht zum Reflektieren des Anregungslichts und der Fluoreszenz in einem grünen Wellenlängenbereich und zum Übertragen der Fluoreszenz in einem roten Wellenlängenbereich und einen dritten Reflektionsbereich zum Reflektieren des Anregungslichts und der Fluoreszenz in einem blauen Wellenlängenbereich umfasst.

9. Lichtquelleneinheit nach Anspruch 5, wobei:
die Anregungslichtquelle konfiguriert ist, blaues Licht linearer Polarisation zu erzeugen;
das Wellenlängenwandlungsmaterial einen Fluoreszenzbereich zum Erzeugen einer Fluoreszenz einer gelben Komponente durch das Anregungslicht in einem blauen Wellenlängenbereich und einen Nicht-Fluoreszenzbereich umfasst;
der erste Filter einen ersten Übertragungsbereich für das ausgewählte Licht zum Übertragen des Anregungslichts und der Fluoreszenz in einem roten Wellenlängenbereich und einen zweiten Übertragungsbereich für das ausgewählte Licht zum Übertragen des Anregungslichts und der Fluoreszenz in einem grünen Wellenlängenbereich umfasst;
der zweite Filter einen Reflektionsbereich für das ausgewählte Licht zum Übertragen des Anregungslichts und zum Reflektieren von Fluoreszenz in einem roten Wellenlängenbereich und einen dritten Übertragungsbereich für das ausgewählte Licht zum Übertragen des Anregungslichts und der Fluoreszenz in einem grünen Wellenlängenbereich umfasst;
die Lichtquelleneinheit ferner eine Wellenplatte (11) umfasst, die zwischen der Trennvorrichtung für einen optischen Pfad und dem Wellenlängenwandler bereitgestellt ist, um das blaue Licht der linearen Polarisation in das blaue Licht der zirkularen Polarisation umzuwandeln und um das blaue Licht der zirkularen Polarisation in das blaue Licht der linearen Polarisation umzuwandeln;
die Trennvorrichtung für einen optischen Pfad eine optische Eigenschaft zum Übertragen des blauen Lichts der linearen Polarisation und zum Reflektieren des blauen Lichts der linearen Polarisation in eine um 90 Grad abweichende Polarisationsrichtung von der der linearen Polarisation aufweist; und
mindestens einer der ersten und zweiten Filter einen Reflektionsbereich zum Reflektieren des blauen Lichts auf die Trennvorrichtung für einen optischen Pfad umfasst.

10. Lichtquelleneinheit nach Anspruch 5, ferner umfassend:
eine blaue Lichtquelle zum Erzeugen von blauem Licht, wobei
die Anregungslichtquelle konfiguriert ist, Anregungslicht in einem ultravioletten Wellenlängenbereich zu erzeugen;
wenn die blaue Lichtquelle ausgeschaltet ist, die Anregungslichtquelle angeschaltet ist und der Wellenlängenwandler zeitaufgeteilt mindestens rotes Licht und grünes Licht, das blaue Licht ausgenommen, als das ausgewählte Licht extrahiert; und
wenn die Anregungslichtquelle ausgeschaltet ist, die blaue Lichtquelle angeschaltet ist und der Wellenlängenwandler zeitaufgeteilt das blaue Licht extrahiert.

11. Lichtquelleneinheit nach Anspruch 10, wobei
der Wellenlängenwandler einen fächerförmigen Bereich zum Extrahieren der Fluoreszenz einer gelben Komponente umfasst.

12. Lichtquelleneinheit nach Anspruch 5, ferner umfassend
einen Spalter eines optischen Pfads (13), der zwischen der Anregungslichtquelle und der Trennvorrichtung für einen optischen Pfad bereitgestellt ist, umfassend einen Übertragungsbereich und einen Reflektionsbereich, wobei:
die Anregungslichtquelle eine blaue Lichtquelle zum Erzeugen von blauem Licht ist; und
der Spalter eines optischen Pfads konfiguriert ist, zeitaufgeteilt grünes Licht und rotes Licht als das ausgewählte Licht durch Führen des blauen Lichts zum Wellenlängenwandler als das Anregungslicht zu extrahieren, wenn einer des Übertragungsbereichs und des Reflektionsbereichs auf einem optischen Pfad der blauen Lichtquelle positioniert ist, und zeitaufgeteilt das blaue Licht zu extrahieren, wenn der andere des Übertragungsbereichs und des Reflektionsbereichs auf dem optischen Pfad der blauen Lichtquelle positioniert ist.

13. Lichtquelleneinheit nach einem der Ansprüche 4 bis 12, wobei
der erste Filter und der zweite Filter des Wellenlängenwandlers jeweils eine transparente Platte (6, 7) aus einem Saphir umfassen.

14. Projektionsvorrichtung, umfassend den Wellenlängenwandler nach einem der Ansprüche 1 bis 13.

15. Projektionsvorrichtung nach Anspruch 14, ferner umfassend
einen Abkühungsluftpfad, der auf einer zweiten Filterseite des Wellenlängenwandlers gebildet ist.

## Revendications

1. Convertisseur de longueur d'onde (5) comprenant :
un matériau de conversion de longueur d'onde (8) conçu pour générer la lumière avec une longueur d'onde différente d'une longueur d'onde de lumière d'excitation ;
un premier filtre (F1) disposé sur un côté d'incidence de la lumière d'excitation, comprenant une région de transmission destinée à transmettre la lumière d'excitation et la lumière avec une certaine longueur d'onde parmi la lumière avec la longueur d'onde différente en tant que lumière sélectionnée (P2) depuis le côté d'incidence de la lumière d'excitation et destiné à réfléchir la lumière autre que la lumière sélectionnée en tant que lumière non sélectionnée (P3) ; et
un deuxième filtre (F2) disposé à l'opposé du premier filtre, plaçant le matériau de conversion de longueur d'onde entre ceux-ci et comprenant une région réfléchissante destinée à réfléchir au moins la lumière sélectionnée et **caractérisé en ce que** le deuxième filtre est conçu pour transmettre la lumière non sélectionnée.

2. Système optique comprenant :
le convertisseur de longueur d'onde (5) selon la revendication 1 ; et
un séparateur de trajet optique (3) disposé sur un côté d'incidence du convertisseur de longueur d'onde pour transmettre la lumière d'excitation et réfléchir la lumière sélectionnée issue du convertisseur de longueur d'onde.

3. Système optique selon la revendication 2, comprenant en outre
une lentille de condenseur (4) disposée entre le séparateur de trajet optique et le convertisseur de longueur d'onde, pour recueillir la lumière d'excitation pour irradier le convertisseur de longueur d'onde et recueillir et guider la lumière sélectionnée vers le séparateur de trajet optique.

4. Unité de source lumineuse (1) comprenant :
une source de lumière d'excitation pour émettre la lumière d'excitation ; et
le système optique selon la revendication 3.

5. Unité de source lumineuse selon la revendication 4, dans laquelle :
le convertisseur de longueur d'onde est entraîné en rotation ;
le premier filtre et le deuxième filtre étant chacun divisés en régions en forme d'éventail dans une direction de rotation ; et
au moins une des régions en forme d'éventail est définie comme étant la région de transmission de la lumière sélectionnée, et une autre des régions opposées à la région de transmission de la lumière sélectionnée est définie comme étant la région réfléchissant la lumière sélectionnée.

6. Unité de source lumineuse selon la revendication 5, dans laquelle
la région réfléchissant la lumière sélectionnée présente une propriété optique pour réfléchir la lumière d'excitation.

7. Unité de source lumineuse selon la revendication 5, dans laquelle :
la couleur de la lumière d'excitation est bleue ;
le matériau de conversion de longueur d'onde (8) est composé d'une région fluorescente jaune (8a) et d'une région non fluorescente (8c) ;
le premier filtre (F1) comprend une première région (DM11) qui transmet la lumière d'excitation et la lumière rouge et réfléchit la lumière verte, et une deuxième région (DM12) qui transmet la lumière d'excitation et la lumière verte et réfléchit la lumière rouge et une troisième région (DM13) qui transmet au moins la lumière d'excitation ;
le deuxième filtre (F2) comprend une quatrième région (DM21) qui reflète la lumière rouge et transmet la lumière verte et la lumière d'excitation, une cinquième région (DM22) qui reflète la lumière verte et transmet la lumière rouge et la lumière d'excitation et une sixième région (DM23) qui réfléchit au moins la lumière d'excitation ;
la région fluorescente jaune (8a) est disposée entre la première région (DM11) et la quatrième région (DM21) ;
la région fluorescente jaune (8a) est disposée entre la deuxième région (DM12) et la cinquième région (DM22) ; et
la région non fluorescente (8c) est disposée entre la troisième région (DM13) et la sixième région (DM23).

8. Unité de source lumineuse selon la revendication 5, dans laquelle :
la source de lumière d'excitation est conçue pour générer une lumière d'excitation dans une plage des longueurs d'onde de l'ultraviolet ;
le matériau de conversion de longueur d'onde comprend une première région fluorescente destinée à générer la fluorescence d'un composant jaune par la lumière d'excitation dans une plage des longueurs d'onde de l'ultraviolet et une deuxième région fluorescente destinée à générer la fluorescence d'un composant bleu ;
le premier filtre comprend une première région de transmission de la lumière sélectionnée destinée à transmettre la lumière d'excitation et la fluorescence dans une plage des longueurs d'onde du rouge, une deuxième région de transmission de la lumière sélectionnée destinée à transmettre la lumière d'excitation et la fluorescence dans une plage des longueurs d'onde du vert et une troisième région de transmission de la lumière sélectionnée destinée à transmettre la lumière d'excitation et la fluorescence dans une plage des longueurs d'onde du bleu ; et
le deuxième filtre comprend une première région réfléchissant la lumière sélectionnée destinée à réfléchir la lumière d'excitation et la fluorescence dans une plage des longueurs d'onde du rouge et transmettre la fluorescence dans une plage des longueurs d'onde du vert, une deuxième région réfléchissant la lumière sélectionnée destinée à réfléchir la lumière d'excitation et la fluorescence dans une plage des longueurs d'onde du vert et à transmettre la fluorescence dans une plage des longueurs d'onde du rouge et une troisième plage réfléchissante destinée à réfléchir la lumière d'excitation et la fluorescence dans une plage des longueurs d'onde du bleu.

9. Unité de source lumineuse selon la revendication 5, dans laquelle
la source de lumière d'excitation est conçue pour générer la lumière bleue de polarisation linéaire ;
le matériau de conversion de longueur d'onde comprend une région fluorescente pour générer la fluorescence d'un composant jaune par la lumière d'excitation dans une plage des longueurs d'onde du bleu et une région non fluorescente ;
le premier filtre comprend une première région de transmission de la lumière sélectionnée destinée à transmettre la lumière d'excitation et la fluorescence dans une plage des longueurs d'onde du rouge et une deuxième région de transmission de la lumière sélectionnée destinée à transmettre la lumière d'excitation et la fluorescence dans une plage des longueurs d'onde du vert ;
le deuxième filtre comprend une région réfléchissant la lumière sélectionnée destinée à transmettre la lumière d'excitation et à réfléchir la fluorescence dans une plage des longueurs d'onde du rouge et une troisième région de transmission de la lumière sélectionnée destinée à transmettre la lumière d'excitation et la fluorescence dans une plage des longueurs d'onde du vert ;
l'unité de source lumineuse comprend en outre une plaque d'onde (11) disposée entre le séparateur de trajet optique et le convertisseur de longueur d'onde pour convertir la lumière bleue de polarisation linéaire en lumière bleue de polarisation circulaire et convertir la lumière bleue de polarisation circulaire en lumière bleue de polarisation linéaire ;
le séparateur de trajet optique présente une propriété optique pour transmettre la lumière bleue de polarisation linéaire, et réfléchir la lumière bleue de polarisation linéaire dans une direction de polarisation différente de celle de la polarisation linéaire de 90 degrés ; et
le premier et/ou le deuxième filtres comprend/comprennent une région réfléchissante destinée à réfléchir la lumière bleue sur le séparateur de trajet optique.

10. Unité de source lumineuse selon la revendication 5, comprenant en outre une source de lumière bleue pour générer la lumière bleue,
la source de lumière d'excitation étant conçue pour générer la lumière d'excitation dans une plage des longueurs d'onde de l'ultraviolet ;
lorsque la source de lumière bleue est éteinte, la source de lumière d'excitation est allumée et le convertisseur de longueur d'onde extrait par répartition temporelle au moins la lumière rouge et la lumière verte autres que la lumière bleue en tant que lumière sélectionnée ; et
lorsque la source de lumière d'excitation est éteinte, la source de lumière bleue est allumée et le convertisseur de longueur d'onde extrait par répartition temporelle la lumière bleue.

11. Unité de source lumineuse selon la revendication 10, dans laquelle
le convertisseur de longueur d'onde comprend une région en forme d'éventail pour extraire la fluorescence d'un composant jaune.

12. Unité de source lumineuse selon la revendication 5, comprenant en outre
un diviseur de trajet optique (13) disposé entre la source de lumière d'excitation et le séparateur de trajet optique, comprenant une région de transmission et une région réfléchissante, dans lequel :
la source de lumière d'excitation est une source de lumière bleue pour générer la lumière bleue ; et
le diviseur de trajet optique est conçu pour extraire par répartition temporelle la lumière verte et la lumière rouge en tant que lumière sélectionnée en guidant la lumière bleue vers le convertisseur de longueur d'onde en tant que lumière d'excitation lorsque la région de transmission ou la région réfléchissante est positionnée sur un trajet optique de la source de lumière bleue et pour extraire par répartition temporelle la lumière bleue lorsque l'autre de la région de transmission et de la région réfléchissante est positionnée sur le trajet optique de la source de lumière bleue.

13. Unité de source lumineuse selon l'une des revendications 4 à 12, dans laquelle
le premier filtre et le deuxième filtre du convertisseur de longueur d'onde comprennent chacun une plaque transparente (6, 7) constituée de saphir.

14. Dispositif de projection comprenant le convertisseur de longueur d'onde selon l'une des revendications 1 à 13.

15. Dispositif de projection selon la revendication 14, comprenant en outre
un trajet d'air de refroidissement formé sur un deuxième côté de filtre du convertisseur de longueur d'onde.
